# EUROPÄISCHE PATENTSCHRIFT

(11) **EP 2 440 687 B1**
(45) Veröffentlichungstag und Bekanntmachung des Hinweises auf die Patenterteilung: **12.08.2015**
(21) Anmeldenummer: 10719356.7
(22) Anmeldetag: 17.05.2010
(51) Int. Cl.: C25B 9/08, C25B 13/00, C25B 15/02, C25B 1/10

(54) **VERFAHREN ZUR ERZEUGUNG EINES WASSERSTOFF-HALTIGEN GASGEMISCHES**
METHOD FOR THE PRODUCTION OF A HYDROGEN-CONTAINING GAS MIXTURE
PROCÉDÉ POUR PRODUIRE UN MÉLANGE GAZEUX CONTENANT DE L'HYDROGÈNE

(30) Priorität: 15.05.2009 DE 102009021506
(43) Veröffentlichungstag der Anmeldung: 18.04.2012
(73) Patentinhaber: Culture, James, Colorado Springs, CO 80907 (US); Schmidt, Axel, 80331 München (DE)
(72) Erfinder: CULTURE, James, Colorado Springs, CO 80907 (US)
(74) Vertreter: nospat Patent- und Rechtsanwälte GbR
(86) Internationale Anmeldenummer: PCT/EP2010/056758
(87) Internationale Veröffentlichungsnummer: WO 2010/130845

(56) Entgegenhaltungen:
- WO-A1-2008/140257
- DE-A1- 3 218 259
- US-A- 4 336 122
- US-A- 4 758 322
- US-A1- 2007 089 997

## Beschreibung

Die vorliegende Erfindung betrifft ein Verfahren zur Erzeugung eines Wasserstoff-haltigen Gasgemisches.

Insbesondere aus dem Markt für Nachrüstsätze für Kraftfahrzeuge sind diverse Ansätze für Verfahren und Vorrichtungen der Eingangs genannten Art bekannt. Entsprechende Vorrichtungen werden auch zur Selbstmontage in großer Vielzahl für die unterschiedlichsten Kraftfahrzeuge angeboten. Diese Vorrichtungen lassen sich grob in zwei Gruppen unterteilen: Eine erste Gruppe erzeugt Knallgas, bzw. HHO-Gas, das aus dem angloamerikanischen Bereich heraus auch als Brown'sches Gas bezeichnet wird. Eine zweite Gruppe von Gaserzeuger-Vorrichtungen erzeugt an einem Gas-Auslass mehr oder weniger reines Wasserstoffgas und getrennt davon an einem weiteren Auslass Sauerstoffgas.

Ohne Beschränkung eines Einsatzfeldes wird nachfolgend zur Darstellung der Erfindung nur auf Personenkraftfahrzeuge eingegangen. Die Erfindung betrifft jedoch generell jede Bauform von Verbrennungskraftmaschinen, also Verbrennungsmotoren als auch Strömungsmaschinen, wie z.B. Strahltriebwerke an Flugzeugen oder stationäre Turbinen eines Heizkraftwerkes. Ein weiters Einsatzfeld der vorliegenden Erfindung besteht in Kombination mit einer Brennstoffzelle darin, dass z.B. beim Nutzbremsen anfallende elektrische Energie durch Umwandlung in Wasserstoff oder ein Wasserstoff-haltiges Gasgemisch zwischen gespeichert werden kann. Beim Abbremsen vor einer roten Ampel steht dann ein Teil der alternativ in Wärme umgesetzten und damit verlorenen Bremsenergie in Form einer zusätzlichen Treibstoff-Menge für eine Start-Beschleunigung beim Umschalten der Ampel auf grün zur Verfügung. Während des beschriebenen Vorgangs fallen keine zu großen Gasmengen an, so dass auch deren Zwischenspeicherung unproblematisch und zudem i.d.R. von nur kurzer zeitlicher Dauer ist.

Zur Herstellung größerer Mengen von Knallgas sind u.a. Elektrolyseure der Filterpressenbauart aus der CH 417 544A oder der WO 2008/138125 A1 bekannt. US 4,758,322 und DE 32 18 259 A1 offenbaren darüber hinaus Vorrichtungen und Verfahren zur Steigerung einer unter Hinblick auf einen jeweils eingeleiteten Strom erzielbaren Gasmenge durch Eindämmung parasitären Leckage-Ströme. Für einen Einsatz zusammen mit Verbrennungskraftmaschinen sind aber auch diese Ansätze zu wenig effizient.

Es ist daher Aufgabe der vorliegenden Erfindung ein Verfahren der vorstehend genannten Art unter deutlich verbesserter Effizienz bei einem Einsatz zusammen mit einer Verbrennungskraftmaschine weiterzubilden.

Diese Aufgabe wird durch die Merkmale der unabhängigen Ansprüche gelöst. Dementsprechend zeichnet sich ein erfindungsgemäßes Verfahren zur Herstellung eines Wasserstoff-haltigen Gasgemisches dadurch aus, dass mit elektrischen Strom beaufschlagte Ladungsflächen möglichst vollständig gegeneinander elektrisch isoliert und nur in einem Zwischenbereich unmittelbarer Nachbarschaft der Ladungsflächen über ein Wassergemisch verbunden betrieben werden, wobei eine elektrisch einstellbare Zusammensetzung eines zu erzeugenden Wasserstoff-haltigen Gasgemisches jenseits der Form eines rein stöchimetrischen HHO- bzw. Knallgasgemisches unter Verwendung einer kombinierten Zelle umfassend eine erste Zelle zusammen mit einem separaten und getrennt schaltbaren Elektrodenpaar einer zweiten Zelle erreicht wird, wobei hierdurch in einem über den Stromfluss einstellbaren Maße nur der H₂-Anteil der zweiten Zelle dem HHO- bzw. Knallgasgemisch der erste Zelle zugeführt wird.

Damit ist erfindungsgemäß erstmals sichergestellt, dass der für eine Elektrolyse wirksame Stromfluss zwischen den benachbarten und stets gegensätzlich geladenen Ladungsflächen zu einem weit überwiegenden Teil durch das Fluid hindurch verläuft. Damit ist fast ausschließlich der Zwischenbereich unmittelbarer Nachbarschaft der Ladungsflächen über das Wassergemisch elektrisch aktiv verbunden, so dass hier in gesteigertem Maße eine elektrolytische Zersetzung von Wasser und damit eine Gaserzeugung mit verbesserter Effizienz stattfindet. Eine wesentliche Effizienzsteigerung der Wirkung des erzeugten Gasgemisches erfolgt durch die Kombination einer HHO-Zelle mit einer H₂- und O₂-Gas separierend erzeugenden zweite Elektrolyse-Zelle derart, dass dem HHO-Gasgemisch ein zusätzlicher H₂-Anteil zugesetzt wird. Dieser H₂-Anteil ist vorzugsweise durch einen eigenen Stromanschluss der zweiten Zelle geregelt. Für gute Ergebnisse betrug der Stromfluss durch diese H₂- und O₂-Gas separierend erzeugenden Elektrolyse-Zelle gemäß einer vorteilhaften Weiterbildungen der Erfindung etwa 10% des durch die HHO-Zelle geleiteten Stroms.

Vorteilhafte Weiterbildungen der Erfindung sind Gegenstand der jeweiligen Unteransprüche. Demnach werden jeweils benachbarte Ladungsflächen unter Verwendung eines Separators beabstandet, der eine Membran gespannt.

Weiter hat sich statt Verwendung eines reinen Gleichstroms das Anlegen eines Rechteck-Stroms mit einer Grundwellenfrequenz von etwa 30 bis 80 Hz, vorzugsweise 48 Hz, als effizienzsteigernd hinsichtlich der Menge der erzeugten Gasgemische erwiesen.

Nachfolgend werden weitere Merkmale und Vorteile erfindungsgemäßer Ausführungsformen unter Bezugnahme auf ein Ausführungsbeispiel anhand von Abbildungen der Zeichnung näher erläutert. In der Zeichnung zeigen:
- Figur 1:: eine schematische Darstellung eines Zusammenbaus einer Ausführungsform einer erfindungsgemäßen Elektrolysezelle zur Herstellung eines Wasserstoff-haltigen Gasgemisches in Form eines HHO- bzw. Knallgasgemisches;
- Figur 2:: eine dreidimensionale Skizze der fertig zusammengesetzten Zelle nach Figur 1;
- Figur 3:: eine Ausführungsform einer erweiterten Elektrolysezelle mit elektrisch einstellbarer Zusammensetzung eines zu erzeugenden Wasserstoff-haltigen Gasgemisches jenseits der Form eines rein stöchiometrischen HHO- bzw. Knallgasgemisches;
- Figur 4:: eine Erweiterung der Ausführungsform nach Figur 3 um einen beheizbaren Vorratstank und
- Figur 5:: eine dreidimensionale Skizze eines Zwischenbereichs mit einem Separator und darin zur Trennung von Wasserstoff und Sauerstoff angeordnet Membran in einer Explosionsdarstellung mit den beiden unmittelbar benachbarten Ladungsflächen;
- Figuren 6a und 6b:: dreidimensionale Skizzen einer bevorzugten Ausführungsform eines Separators mit Membran gemäß Figur 5 unter Verwendung zweier spiegelbildlicher, C-förmiger Kunststoff-Rahmenhälften, die in der Darstellung von Figur 6b durch Laminieren mit dem Separator einstückig verbunden werden;
- Figur 7:: eine dreidimensionale Skizze eines zur separaten Ableitung von Wasserstoff und Sauerstoff aus Separatoren gemäß den Figuren 5 und 6b ausgebildete Platte mit doppelter Kammstruktur;
- Figur 8:: eine dreidimensionale Skizze gemäß Figur 1 zur schematischen Darstellung eines Zusammenbaus einer Ausführungsform einer erfindungsgemäßen Elektrolysezelle zur Herstellung weitgehend getrennter Wasserstoff- und Sauerstoff-Gasströme;
- Figur 9:: eine isometrische Ansicht einer alternativen Vorrichtung mit Anordnung der ersten Zelle neben der zweiten Zelle 3 auf gleicher Ebene gemeinsam unter dem Vorratstank;
- Figur 10:: eine Draufsicht auf die Ausführungsform gemäß Figur 9 mit Darstellung verdeckter Kanten und
- Figur 11:: eine Explosionsdarstellung der Ausführungsform gemäß Figur 9 und 10.

Über die verschiedenen Abbildungen hinweg werden für gleiche Elemente stets die gleichen Bezugszeichen verwendet. Ohne Beschränkung der Erfindung wird nachfolgend nur ein Einsatz einer erfindungsgemäßen Zelle in einem Kraftfahrzeug dargestellt und beschrieben.

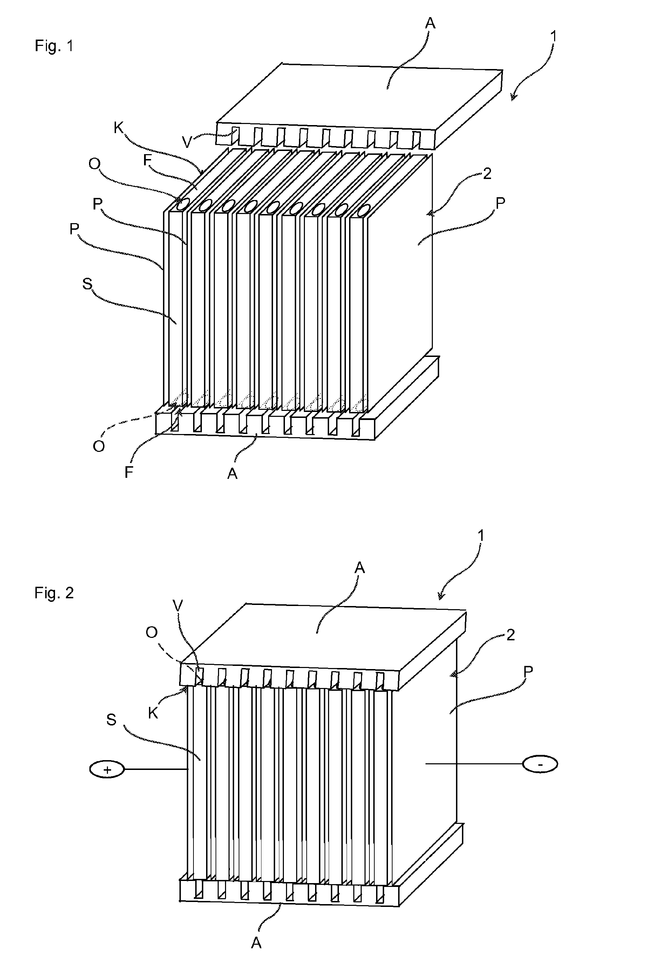

Figur 1 zeigt einen prinzipiellen Aufbau einer ersten Ausführungsform einer Vorrichtung 1 zur Umsetzung eines erfindungsgemäß in der Effizienz gesteigerten Verfahrens. Die schematische Darstellung deutet einen Zusammenbau einer erfindungsgemäßen Vorrichtung 1 mit einer Elektrolysezelle 2 zur Herstellung eines Wasserstoff-haltigen Gasgemisches in Form eines HHO- bzw. Knallgasgemisches an, bei dem eine Anzahl von als Edelstahl-Platten P ausgeführten Ladungsflächen paarweise im Bereich seitlich an ihre Stirnkanten K angrenzend über eine rahmenförmigen elektrisch isolierenden Separator S miteinander verbunden sind. Dieser Aufbau entspricht weitgehend dem einer geschlossenen Zelle, wobei hier jedoch in einer späteren Einbaulage an einer oberen und einer unteren Seitenfläche F eines jedem Separators S je mindestens eine Öffnung O zum Fluid-Eintritt und Gasaustritt vorgesehen sind. So kann nachfolgend ein Wassergemisch W aus Wasser mit geringer Zugabe von Elektrolyt zwischen die benachbarten Ladungsflächen P eintreten und ein unter Stromeinwirkung entstehendes Gas oder Gasgemisch zwischen den Ladungsflächen P aus dem Separator S heraus auch wieder austreten.

Die Öffnungen O der Seitenfläche F eines jedem Separators S werden nachfolgend mit Ausnehmungen V in einer kammartig geschlitzt ausgebildeten Struktur einer Abdeckung A fluchtend überdeckt, wobei diese Abdeckung A freie Bereiche bzw. Stirnkanten K der Ladungsflächen P elektrisch isolierend überdeckt und so einschließt. Damit sind durch die erfindungsgemäße Einführung verlängerter Pfade für einen Potentialausgleich zwischen den Ladungsflächen alle Ströme gezwungen, durch das Wassergemisch zu fließen. Das erhöht die Ausbeute an erzeugtem Gas bzw. Gasgemisch erheblich.

Figur 2 zeigt die fertig zusammengesetzte Zelle nach Figur 1 in einer dreidimensionalen Skizze mit angebrachten kammartig mit U- oder V-förmigen Ausnehmungen V geschlitzt ausgebildeten Strukturen der Abdeckungen A. Der Zusammenbau wird überwiegend durch Verklebung der aus Acrylglas gestehenden elektrisch isolierenden Teile mit entsprechend bekannten und erprobten Klebstoffen bewerkstelligt. Damit sind insbesondere die Stirnkanten K auch benachbarter Platten nur über ein nicht weiter dargestelltes Wassergemisch W miteinander elektrisch verbunden, parasitäre Strompfade ohne Kontakt mit dem Wassergemisch W sind weitgehend unterbunden.

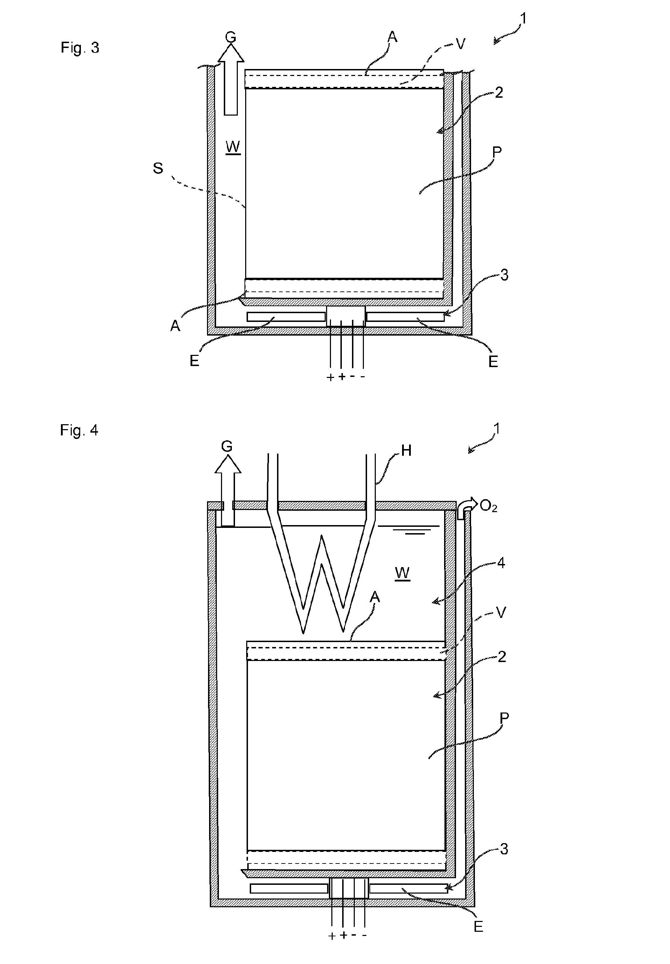

Figur 3 zeigt eine Ausführungsform einer erweiterten Elektrolysezelle mit elektrisch einstellbarer Zusammensetzung eines zu erzeugenden Wasserstoff-haltigen Gasgemisches, dessen Zusammensetzung jenseits der eines rein der 2 : 1-Stöchiometrie des H₂O-Moleküls liegenden Gasgemisches. Diese kombinierte Vorrichtung 1 umfasst eine erste Zelle 2 nach Figuren 1 und 2, hier in einer Seitenansicht, zusammen mit einem separaten und getrennt hinsichtlich des Stromflusses regelbaren Elektrodenpaar E einer zweiten Zelle 3. Es ist erkennbar, dass hierdurch in einem über den durch die zweite Zelle 3 regelbaren Stromfluss in einstellbarem Maße nur der H₂-Anteil der zweiten Zelle 3 dem HHO- bzw. Knallgasgemisch der ersten Zelle 2 zugeführt wird. Damit ist eine Abweichung von einem stöchiometrischen 2 : 1 -Verhältnis von Wasserstoffgasatomen zu Sauerstoffatomen in dem entlang des in Figur 3 eingeblendeten Pfeils abgeleiteten Gasgemischs G möglich.

Die erste Zelle 2 und die zweite Zelle 3 sind durch das Fluid W miteinander verbunden. Elektrische Ströungs-Stromflüsse sind so weit als möglich durch den konstruktiven Aufbau von Umwegstrecken bzw. Labyrinthen reduziert worden.

Eine Erweiterung der Ausführungsform nach Figur 3 um einen beheizbaren Vorratstank ist in Figur 4 dargestellt. Die Heizung kann elektrisch oder durch Abgasabwärme betrieben werden, es wird jedoch eine Ankopplung an einen nicht weiter dargestellten Motor-Kühlkreislauf bevorzugt, um das Wassergemisch auf eine Betriebstemperatur zu bringen und dort auch zu halten. Der Pfeil zeigt eine Öffnung zur Entnahme des erwünschten Gasgemischs G an, einer zweiten Öffnung entweicht Sauerstoffgas.

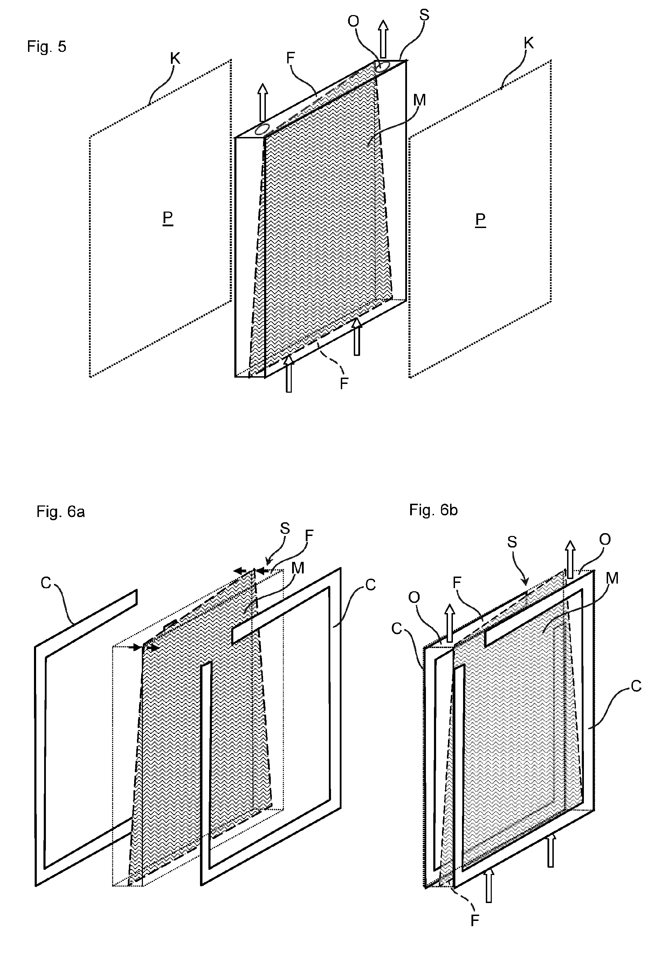

Figur 5 zeigt eine dreidimensionale Skizze eines Zwischenbereichs mit einem Separator S und darin zur Trennung von Wasserstoff und Sauerstoff angeordnet Membran M in einer Explosionsdarstellung mit den beiden unmittelbar benachbarten Ladungsflächen. Figuren 6a und 6b stellen einen Aufbau und Zusammenbau einer bevorzugten Ausführungsform eines Separators mit Membran gemäß Figur 5 in gleicher dreidimensionaler Skizze dar. Hierzu finden zwei spiegelbildliche, G- bzw. C-förmige Kunststoff-Rahmenhälften C Verwendung, die in der Darstellung von Figur 6b durch Laminieren mit dem Separator einstückig verbunden werden. Die Membran M wird in den Bereichen, wo ein der beiden Rahmenhälften C ihre Lücke aufweist, zur Bildung von Öffnungen O in sich verdreht, was durch die Pfeile in Figur 6a angedeutet ist.

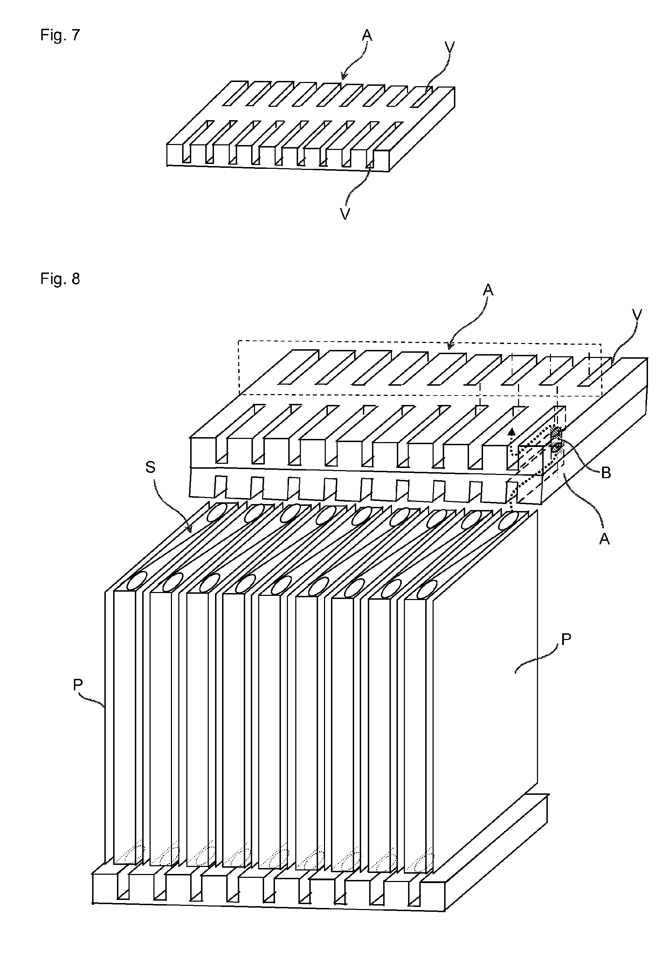

Figur 7 ist eine dreidimensionale Skizze einer zur separaten Ableitung von Wasserstoff und Sauerstoff aus Separatoren gemäß den Figuren 5 und 6b ausgebildete Abdeckplatte A mit doppelter Kammstruktur nur über weniger als die Hälfte verlaufender Ausnehmungen V. Figur 8 zeigt eine auf Figur 7 aufbauende dreidimensionale Skizze gemäß Figur 1 zur schematischen Darstellung eines Zusammenbaus einer Ausführungsform einer erfindungsgemäßen Elektrolysezelle zur Herstellung weitgehend getrennter Wasserstoff- und Sauerstoff-Gasströme. Durch angedeutete Aussparungen oder Bohrungen B gelangt ein jeweiliger Gasbestandteil unter deutlicher Verlängerung der in Kontakt mit dem Wassergemisch W elektrisch wirksamen Wegstrecke in mäandernder Form zu nicht weiter dargestellten Gas-Auslässen zur selektiven Zuführung in einen Frischluft-Einlass vor einem etwaig vorgesehen Turbo-Verdichter einer jeweiligen Brennkraftmaschine.

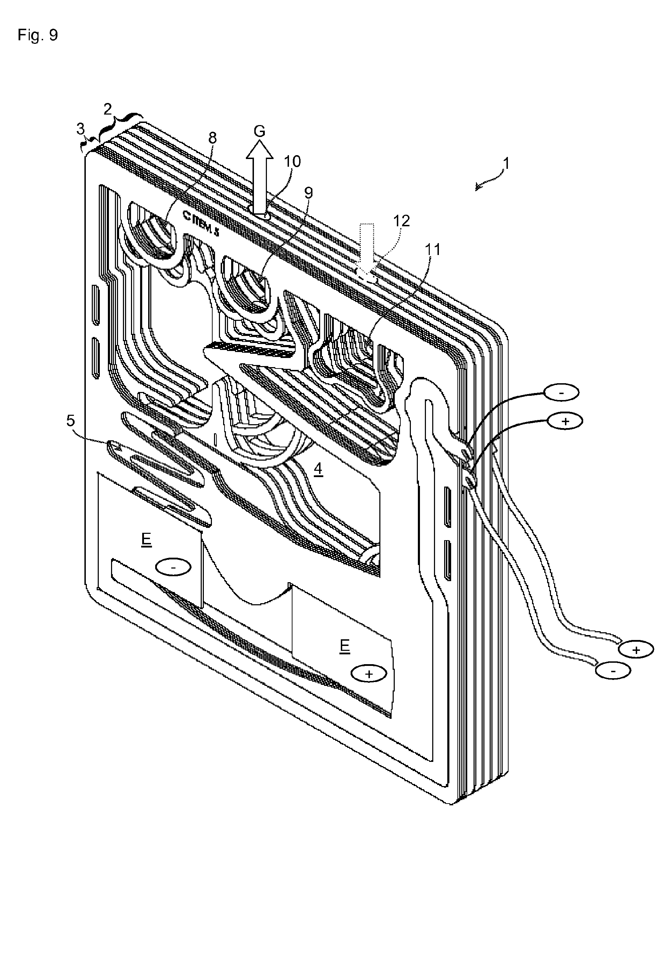

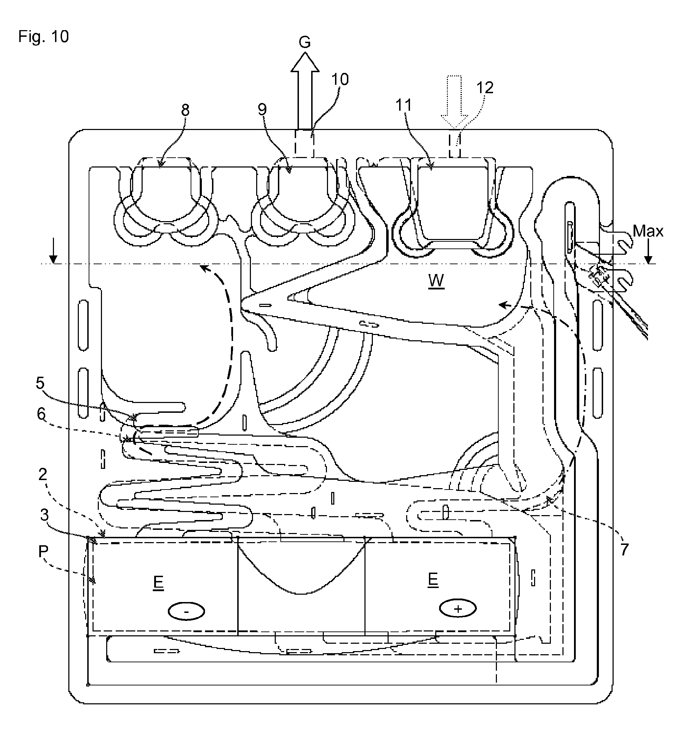

Während in der Ausführungsform gemäß der Darstellung der Figur 4 unter einem gemeinsamen Vorratstank 4 von Wassergemisch W eine erste Zelle 2 über einer zweiten Zelle 3 angeordnet ist, werden in einem weiteren Ausführungsbeispiel gemäß Figuren 9 bis 11 die erste Zelle 2 neben der zweiten Zelle 3 auf im Wesentlichen gleicher Ebene gemeinsam unter dem Vorratstank 4 angeordnet. Die isometrische Ansicht von Figur 9 zeigt, dass aus Polyacryl-Glas hergestellte Schichten in zwei unterschiedlichen Dicken von hier ca. 3,1 mm und ca. 0,91 mm. Die erkennbar dickeren Schichten von 3,1 mm tragen Kanäle für die Zuführung von Wassergemisch W sowie die Abfuhr der Gasblasen G von den Elektroden P, E. Im wesentlichen Unterschied zu den vorangehenden Ausführungsformen wird hier nun eine Maßnahme gegen eine übermäßige Erwärmung des Wassergemischs W im normalen Betrieb durch ein gezieltes Pumpen des Wassergemischs W ergriffen. Basis hierfür ist die Erkenntnis, dass die Bildung von Gasblasen an den Elektroden an sich zwar kühlend wirkt, zugleich aber durch stellenweise Isolation die elektrischen Eigenschaften ändert. Diese Änderung kann aufgrund der Anhaftung der Gasblasen an einer jeweiligen Elektrode relativ dauerhaft sein und damit an anderen Stellen zu lokalen Überlastungen führen. Eine ausreichende Bewegung des Wassergemischs W bewirkt nun quasi ein Fortspülen der neu entstandenen Gasblasen von den Elektroden. Ohne zusätzliche bewegliche oder gar anzutreibende Teile wird diese Strömung unter Nutzung des Venturi-Effekts selbst dadurch erzeugt, dass das Gemisch aus Wasser und Gasblasen von den jeweiligen Elektroden durch mäandernde Pfade 5, 6, 7 zum Vorratstank 4 hin aufsteigt und damit eine Pumpe bildet. Diese Pfade 5, 6, 7 liegen voneinander separiert auch in verschiedenen Schichten der dargestellten Anordnung, siehe Figur 10.

Die Anordnung von Figur 9 weist drei als Pumpen ausgebildete mäandernde Kanäle 5, 6, 7 auf, wobei von den negativ geladenen und damit Wasserstoff-Gas abgebenden Elektroden her die Kanäle in einen gemeinsamen Bereich mit zwei Strukturen 8, 9 zur Schaum-Minderung führen, von der aus das Gasgemisch G über eine Öffnung 10 entnommen wird. Die positiv geladene und damit Sauerstoffgas erzeugenden Elektrode E der zweiten Zelle 3 ist entlang der Strich-punktierten Pfeillinie über den Kanal 7 mit einem davon getrennten Bereich mit eigener Struktur 11 zur Schaum-Minderung verbunden und damit klar getrennt. Hier ist auch eine Öffnung 12 zum Nachfüllen von Wasser vorgesehen.

Die vergleichsweise dünneren Schichten umrahmen die jeweiligen Elektroden und ggf. elektrischen Zuleitungen. Bei den elektrischen Zuleitungen ist wieder mit Hinweis auf Figur 10 zu beachten, dass- in einer Einbaulage gesehen - stets von unten her die zugehörigen Elektroden-Bleche kontaktieren, damit Elektrolyse nur an den Elektroden-Bleche und nicht an den Zuleitungen stattfindet. Zudem verlaufen die Zuleitungen erst in einer U-Kurve über einen maximalen Füllstand MAX hinaus, um dann erst nach unten abknickend aus dem verklebten Acrylglas-Gehäuse heraus zu treten. Damit kann auch im Dauerbetrieb das Austreten von Wassergemisch entlang der elektrischen Zuleitungen unterbunden werden.

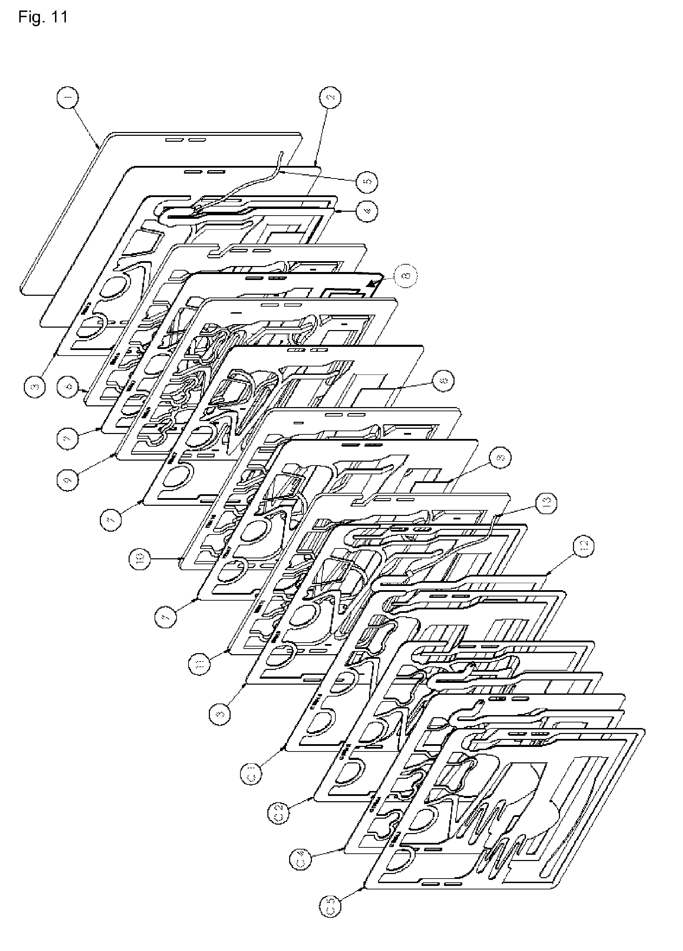

Es ergibt sich damit ein sehr kompakter und raumeffizienter Aufbau in schichtweiser Ausführung, der hinsichtlich der Leistungsfähigkeit in Bezug auf Gaserzeugung beider Arten von Zellen 2, 3 einfach skalierbar oder durch Austausch variierbar ist. So zeigt die Darstellung von Figur 11 als Explosionsdarstellung der Anordnung von Figur 9, dass hier die erste Zelle 2 insgesamt fünf Elektroden mit den eingekreisten Bauteilbezeichnungen 4, 8 und 12 umfasst, wovon nur zwei von außen mit Spannung versorgt werden. Die in einem Segment mit der Bauteilbezeichnung 7 eingebetteten Elektroden können mit voroder nachgeordneten Segmenten mit den Bauteilbezeichnungen 9, 10, 11 einfach zugefügt werden.

In einer wesentlichen, hier nicht weiter zeichnerisch dargestellten Weiterbildung werden Membranen in einem Abstand zu den in Kontakt mit dem Wassergemisch W stehenden Oberflächen der Platten P gebracht. Verwendung finden hier Membranen der Bauart, wie in den Abbildungen der Figuren 5 bis 6b dargestellt. Diese werden nun in die den Elektrodenplatten P entsprechenden Aussparungen der dickeren Acryl-Platten eingepasst. Damit sind gegenüber der in Figur 11 dargestellten Anordnung bessere Wirkungsgrade und höhere Reinheiten bei Anpassung auf reine Wasserstoff-Gas-Erzeugung zu erreichen.

Zur Verbesserung der Korrosionsbeständigkeit hat es sich erwiesen, dass das Zuführen einer geringen Menge von Dieseloder Rizinus-Öl hilfreich und wirkungsvoll ist. Das Öl überdeckt Stellen mit Materialfehlern, Einschlüssen oder kleinen Löchern und verhindert damit über eine gewisse Betriebszeit auch deren fortschreitende Vergrößerung.

### Bezugszeichenliste

- 1: Vorrichtung
- 2: erste Zelle / Effizienz-Teil
- 3: zweite Zelle / steuerbarer Kontroll-Teil
- 4: Vorratstank
- 5: mäandernder Kanal / Pumpe
- 6: mäandernder Kanal / Pumpe
- 7: mäandernder Kanal / Pumpe
- 8: Struktur zur Schaum-Minderung
- 9: Struktur zur Schaum-Minderung
- 10: Öffnung zur Entnahme von G
- 11: Struktur zur Schaum-Minderung
- 12: Öffnung zum Nachfüllen von Wasser
- 13:

- W: Wassergemisch / Fluid
- P: Platten / Ladungsflächen
- E: Elektrode
- K: Stirnkante
- M: Membran
- S: Separator
- O: Öffnung im Separator
- H: Heizung
- A: Abdeckplatte
- F: Seitenfläche
- V: Ausnehmung in der Abdeckplatte A
- G: Gasgemisch
- B: Bohrung durch die Abdeckplatte A

## Patentansprüche

1. Verfahren zur Erzeugung eines Wasserstoff-haltigen Gasgemisches, bei dem mit elektrischen Strom beaufschlagte Ladungsflächen mit einem Wassergemisch in Kontakt stehen, wobei die mit elektrischen Strom beaufschlagte Ladungsflächen (P) im Bereich ihrer Stirnkanten (K) über einen elektrisch isolierenden Separator (S) miteinander verbunden werden und möglichst vollständig gegeneinander elektrisch isoliert und nur in einem Zwischenbereich unmittelbarer Nachbarschaft der Ladungsflächen (P) über das Wassergemisch (W) elektrisch verbunden betrieben werden,
**dadurch gekennzeichnet,**
**dass** eine elektrisch einstellbare Zusammensetzung eines zu erzeugenden Wasserstoff-haltigen Gasgemisches jenseits der Form eines rein stöchimetrischen HHO- bzw. Knallgasgemisches unter Verwendung einer kombinierten Zelle umfassend eine erste Zelle (2) zusammen mit einem separaten und getrennt schaltbaren Elektrodenpaar (E) einer zweiten Zelle (3) erreicht wird, wobei hierdurch in einem über den Stromfluss einstellbaren Maße nur der H₂-Anteil dem HHO- bzw. Knallgasgemisch zugeführt wird..

2. Verfahren nach Anspruch 1,
**dadurch gekennzeichnet, dass** jeweils benachbarte Ladungsflächen (P) unter Verwendung eines Separators (S) beabstandet werden, der eine Membran (M) gespannt hält.

3. Verfahren nach einem der vorhergehenden Ansprüche,
**dadurch gekennzeichnet, dass** der Stromfluss durch diese H₂-und O₂-Gas separierend erzeugenden Elektrolyse-Zelle etwa 10% des durch die HHO-Zelle geleiteten Stroms beträgt.

4. Verfahren nach einem der vorhergehenden Ansprüche,
**dadurch gekennzeichnet, dass** der elektrische Strom mit einer Frequenz (f) getaktet ein- und ausgeschaltet wird.

5. Verfahren nach dem vorhergehenden Anspruch,
**dadurch gekennzeichnet, dass** der elektrische Strom in Form eines Rechteck-Stroms mit einer Grundwellenfrequenz von etwa 30 bis 80 Hz ein- und ausgeschaltet wird.

6. Verfahren nach dem vorhergehenden Anspruch,
**dadurch gekennzeichnet, dass** der elektrische Strom in Form eines Rechteck-Stroms mit einer Grundwellenfrequenz von 48 Hz ein- und ausgeschaltet wird.

## Claims

1. A method for producing a hydrogen-containing gas mixture, in which charging surfaces to which electric current is applied are in contact with a water mixture,
where the charging surfaces (P) to which electric current is applied are connected to each other in the region of their leading edges (K) via an electrically insulating separator (S), are electrically insulated from each other as completely as possible, and are operated through an electrical connection via the water mixture (W) only in an intermediate region in which the charging surfaces (P) are immediately adjacent to each other
**characterized in that**
an electrically adjustable composition of a hydrogen-containing gas mixture to be produced contains more than the form of a purely stoichiometric HHO or oxyhydrogen gas mixture through the use of a combined cell including a first cell (2) and a separate and separately switchable electrode pair (E) of a second cell (3) by means of which, in an amount that can be adjusted via the current flow, only the H₂ portion is supplied to the HHO or oxyhydrogen gas mixture.

2. The method as recited in claim 1,
**characterized in that** adjacent charging surfaces (P) are spaced apart from each other using a separator (S), which holds a diaphragm (M) in a taut position.

3. The method as recited in one of the preceding claims,
**characterized in that** the current flow through this electrolysis cell that produces H₂ and O₂ gas separately is approximately 10% of the current conveyed through the HHO cell.

4. The method as recited in one of the preceding claims,
**characterized in that** the electric current is switched on and off in a clocked fashion at a given frequency (f).

5. The method as recited in the preceding claim,
**characterized in that** the electric current is switched on and off applying a square-wave current with a fundamental frequency of approximately 30 to 80 Hz (cycles).

6. The method as recited in the preceding claim,
**characterized in that** the electric current is switched on and off applying a square-wave current with a fundamental frequency of 48 Hz (cycles).

## Revendications

1. Procédé pour produire un mélange gazeux contenant de l'hydrogène, dans lequel des surfaces de charge sollicitées par un courant électrique sont en contact avec un mélange d'eau, et les surfaces de charge (P) sollicitées par le courant électrique sont reliées entre elles au niveau de leurs arêtes frontales (K) via un séparateur (S) électriquement isolant et fonctionnent en étant isolées électriquement si possible complètement les unes par rapport aux autres et en étant connectées électriquement uniquement dans une zone intermédiaire directement adjacente des surfaces de charge (P) via le mélange d'eau (W),
**caractérisé en ce que**
l'on obtient une composition électriquement ajustable d'un mélange gazeux à produire contenant de l'hydrogène qui se présente au-delà de la forme d'un mélange gazeux HHO ou détonant purement stoechiométrique, en utilisant une cellule combinée comportant une première cellule (2) ensemble avec une paire d'électrodes commutable distinctement et séparément (E) d'une seconde cellule (3), seulement la part H₂ étant ajoutée au mélange gazeux HHO ou détonant d'une manière ajustable par le courant circulant.

2. Procédé selon la revendication 1,
**caractérisé en ce que** des surfaces de charge (P) respectives adjacentes sont espacées l'une de l'autre en utilisant un séparateur (S) qui maintient une membrane (M) à l'état tendu.

3. Procédé selon l'une des revendications précédentes,
**caractérisé en ce que** le courant qui circule à travers cette cellule d'électrolyse générant séparément le gaz H₂ et le gaz O₂ s'élève à environ 10 % du courant qui passe à travers la cellule HHO.

4. Procédé selon l'une des revendications précédentes,
**caractérisé en ce que** le courant électrique est remis et coupé de manière cadencée à une fréquence (f).

5. Procédé selon l'une des revendications précédentes,
**caractérisé en ce que** le courant électrique est remis et coupé sous la forme d'un courant rectangulaire à une fréquence d'onde fondamentale d'environ 30 à 80 Hz.

6. Procédé selon l'une des revendications précédentes,
**caractérisé en ce que** le courant électrique est remis et coupé sous la forme d'un courant rectangulaire à une fréquence d'onde fondamentale d'environ 48 Hz.
